# EUROPEAN PATENT APPLICATION

(11) **EP 0 978 344 A2**
(43) Date of publication of application: **09.02.2000**
(21) Application number: 99111079.2
(22) Date of filing: 17.06.1999
(51) Int. Cl.: B23K 9/09

(54) **Welding generator with active filter**

(30) Priority: 07.07.1998 IT PD980170
(71) Applicant: SELCO S.r.L., I-35010 Onara di Tombolo (Padova) (IT)
(72) Inventor: Montecchi, Gabriele, 35135 Padova (IT)
(74) Representative: Modiano, Guido, Dr.-Ing.

(57) **Abstract**

A welding generator with active filter, comprising a rectifier block (A) which is powered by the mains and is connected to an inverter block (B) which is in turn connected to an output diode block (C) and an active filter block (D) is provided which branches off in parallel to the input of the rectifier block, said filter block determining a current (I₂) with a waveform which, added to the current (I₁) of the rectifier block (A), generates as a resultant a waveform (I₃) which is sinusoidal as seen from the mains.

## Description

The present invention relates to a welding generator with active filter.

More particularly, the invention relates to a welding generator in which the circuit system is provided so that the absorbed current, as seen by the mains, is sinusoidal or practically sinusoidal.

Conventional circuit arrangements achieve this result by way of a series circuit which is interposed between a rectifier block, supplied with the mains voltage, and a current transformer which is pulse-controlled by static switches and which supplies, on the secondary winding, a network which contains diodes and resistors, in a conventional arrangement, in order to supply current to the welding arc.

In conventional systems, the series circuit, which determines the sinusoidal waveform seen from the mains side, is affected by all of the welding power and is integrated in the circuit layout, entailing the need to provide dimensions which are appropriate for the transmitted power and a further need to combine circuit blocks.

The aim of the present invention is to provide a welding generator in which the current waveform is sinusoidal as seen from the mains.

Another object of the invention is to provide a control block for obtaining a sinusoidal waveform.

Another object of the invention is to provide a control block which can be adapted to normal welding machines.

This aim, these objects and others which will become apparent hereinafter are achieved by a welding generator with active filter, comprising a rectifier block which is powered by the mains voltage and is connected to an inverter stage which is in turn connected to an output diode block, characterized in that an active filter block branches off in parallel to the input of the rectifier block, said filter block determining a waveform which, added to the waveform of the rectifier block, generates a resultant for the current which is sinusoidal as seen from the mains.

Further characteristics and advantages of the invention will become apparent from the detailed description of a preferred embodiment, schematically illustrated only by way of non-limitative example in the accompanying drawings, wherein:
Figure 1 is a block diagram of the welding generator according to the present invention;
Figure 2 shows the waveforms of the current.

With reference to the above Figures, the welding generator according to the invention is composed of a rectifier block "A" which is series-connected to an inverter block "B" which is in turn series-connected to a block of diodes "C" which supply power to a welding arc, designated by "E".

On this conventional layout, a block D which constitutes an active filter branches off in parallel to the input of the rectifier block A.

The block D detects the mains voltage V and the current I₁ of the rectifier block A.

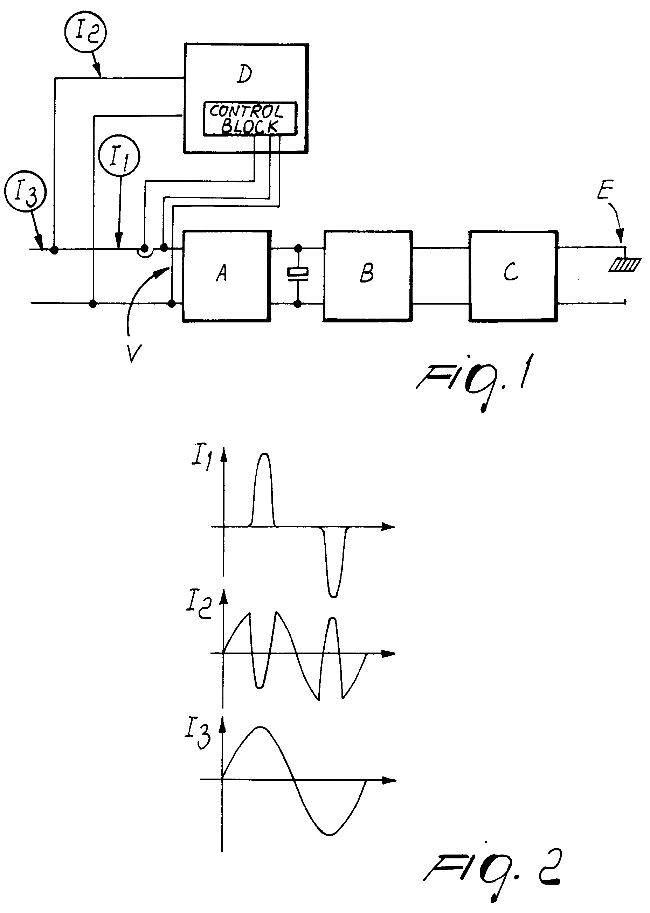

With these two parameters, the block D generates a current I₂ (see Figure 2) whose waveform is complementary to the waveform of the current I₁ with respect to a sinusoid.

This current is fed to the mains and, by being added to the current I₁ it generates, as seen from the mains, a current I₃.

The current I₃, as seen from the mains, has a sinusoidal or practically sinusoidal form.

The block D branched off in parallel is not affected by the power absorbed by the welding arc E but acts entirely independently.

This allows to have an independent block which can be applied to any welding generator without having to modify the blocks and their arrangement.

From the above description and from the drawings it is evident that the aim and all the intended objects have been achieved and in particular that a generator with an active filter branched off in a parallel configuration with respect to the input has been provided which allows to determine a current which, when combined with the current absorbed by the rectifier block, generates a sinusoidal waveform for the current as seen from the mains.

The disclosures in Italian Patent Application No. PD98A000170 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A welding generator with active filter, comprising a rectifier block (A) which is powered by the mains and is connected to an inverter block (B) which is in turn connected to an output diode block (C), characterized in that an active filter block (D) is provided which branches off in parallel to the input of the rectifier block, said filter block determining a current (I₂) with a waveform which, added to the current (I₁) of the rectifier block (A), generates as a resultant a waveform (I₃) which is sinusoidal as seen from the mains.

2. The generator according to claim 1, characterized in that said active filter block (D) is independent with respect to the other blocks and to their combination and branches off in parallel to the mains side of the rectifier block (A).

3. The generator according to claim 1, characterized in that said active filter block (D) detects voltage and current parameters in input to the rectifier block (A) and on the basis of said parameters it generates a current (I₂) with a waveform which is complementary, with respect to a sinusoid, to the current (I₁) of the rectifier block (A).
